# EUROPEAN PATENT APPLICATION

(11) **EP 2 377 588 A1**
(43) Date of publication of application: **19.10.2011**
(21) Application number: 10189765.0
(22) Date of filing: 03.11.2010
(51) Int. Cl.: A63F 13/12

(54) **Method for analyzing, matching and delivering questions of online game**

(30) Priority: 13.04.2010 TW 099111368
(71) Applicant: Fundation Digital entertainment Co., Ltd., Taipei County (TW)
(72) Inventor: Tsai, Hue-Yen, Chung-Ho City, Taipei County (TW); Wu, Wang-Shih, Chung-Ho City, Taipei County (TW)
(74) Representative: Karakatsanis, Georgios

(57) **Abstract**

The present invention is to provide a method for analyzing, matching and delivering questions of an online game, which is applied to a question-and-answer server (Q & A server) linked to a plurality of user terminals (such as personal computers, hand-held mobile phones and etc.) respectively. When the Q & A server receives a question signal transmitted from the user terminal, the Q & A server executes the steps of determining whether the question signal includes at least one of keywords preset in a keyword database; reading property tag corresponding to the keyword from a tag database; determining whether property tags preset in a plurality of user accounts in a user database are matched with the property tag corresponding to the question signal; and transmitting the question signal to user terminals corresponding to the user accounts, which have the property tags matched with the property tag corresponding to the question signal.

## Description

### FIELD OF THE INVENTION

The present invention relates to a method for processing a question relating to an online game and submitted by a game player through a user terminal of the online game, and more particularly to a method for analyzing the question, setting at least one property tag to the question, and automatically matching the property tag with the other user terminals and delivering the question to the other user terminals which have user accounts corresponding to the property tag and capable of resolving the question, so as to enable the game player to promptly obtain an appropriate answer from the other game players who also play the same online game.

### BACKGROUND OF THE INVENTION

Recently, online games have been designed and developed in a variety of types, such as strategy games, shooting games, action games or large-scale multiplayer online role-playing games, for satisfying entertainment desires of different game players. Furthermore, functions of online games are significantly increased nowadays. For example, functions of community and dating have already been embedded in most online games for allowing unfamiliar game players to chat and discuss topics in relation to the online games with each other when not playing the online games. Therefore, studies of a market research company "In-Stat" have estimated that total revenue of online game market in Asia-Pacific area will reach 21.1 billion US dollars between 2008 and 2013. In other words, online games have become a whole new business model (i.e. home economy) which possesses huge profits, so that many companies are devoted to develop various online game services to seize opportunities in the online game market for the purposes of increasing more profits and consolidating loyalties of game players of their own.

Generally, when broadband networks have been widely used by many homes, many people are getting used to utilize online resources for solving questions about work or entertainment. For example, when a game player finds a question (e.g. don't understand how to transfer task of a role in an online game) while playing the online game (e.g. an online game namely "LINEAGE"), the game player generally uses the following two query methods to obtain a solution and then continue the online game:
(1) The game player can directly input keywords (such as "LINEAGE", "TASK TRANSFER" and etc.) relating to his/her question into a search engine of web pages (such as "GOOGLE" at website address "www.google.com.tw" ). Then, the search engine will list information of web pages including the keywords. Hence, the game player can click in each web page to view content therein and check whether the web page provides an appropriate answer for solving the question.
(2) The game player can publish the question on a website of knowledge-sharing platform (such as forums, "BBS", "YAHOO! KIMO KNOWLEDGE PLUS", ... etc.) to query "HOW TO FINISH TASK TRANSFER OF A ROLE IN AN ONLINE GAME, NAMELY LINEAGE" and wait for solutions provided by other users.

The above two query methods are now used by most of the game players. However, there are still existing many inconveniences and disadvantages. Firstly, for the first query method, the game player generally inputs keywords into the search engine instead of complete sentences. Thus, whether the contents of web pages provided by the search engine are acceptable to the game player or not, the search engine always lists all the information of the web pages, which have the contents including the keywords, for the game player. As a result, the information obtained by the game player from the search engine is tedious and fragmentary, and the game player must spend a long period of time to filter out many contents of web pages irrelative to the keywords by himself/herself, so as to ensure whether or not the correct solution will eventually be found. In addition, because most websites of the search engines provide temporary storage function for storing the information of web pages, the website of the search engine may list the information of many web pages for the game player even though the homepages or websites thereof have already been removed or changed. Therefore, when the game player enters into the removed or changed websites of web pages according to the searched information, the game player can not obtain any desired solution from the contents of web pages. On the other hand, for the second query method, when the game player publishes a question on a website of knowledge-sharing platform, other users generally can not immediately know the published question from the website of knowledge-sharing platform, so that the question can not be solved in a short period of time. In addition, even though some users finally view the published question from the website of knowledge-sharing platform, there may be no body who is capable of solving the question, so that a correct answer in response to the question may not be provided by the website of knowledge-sharing platform in time. In addition, when one of the other users is able to provide a solution in response to the question, the website of knowledge-sharing platform generally informs the game player who submitted the question by an E-mail, however, if the game player is busy in playing the online game while receiving the E-mail, he/she may not have time to use an E-mail software to open the E-mail and is still unable to immediately obtain the solution therein. As a result, the game player will be unable to clearly solve his/her question in playing the online game, or must pay more attention to whether or not his/her question is replied at any time which in turn causes the game player unable to concentrate on playing the online game. Besides, if other game players have the same question, the website of knowledge-sharing platform doesn't inform them the solution corresponding thereto due to the reason that they are not the original game player who published the question onto the website of knowledge-sharing platform. Thus, many game players will keep on publishing the same question on the website of knowledge-sharing platform and waiting for the solution corresponding thereto.

Furthermore, except the above disadvantages of the two query methods, because most of the game players always encounter the similar questions while playing the online games and hope to obtain correct solutions (such as game hints, passing methods and etc.) corresponding thereto, the website of knowledge-sharing platform is thus full of too many similar questions, so that those game players capable of providing correct solutions are not willing to repeatedly answer the similar or same questions, which eventually causes the questions submitted by the game players not to be correctly answered. Even though the game players submitting the questions can review old replies thereof from the website of knowledge-sharing platform and find whether or not there are corresponding answers, however, since there are too many websites of knowledge-sharing platform for the game players to review one by one, different game players will inevitably and continuously repeatedly publish and query the similar or same questions on the website of knowledge-sharing platform, which also causes the resources of knowledge-sharing platform to be seriously wasted. Meanwhile, the questions published by some game players may easily be covered by the similar or same questions published by the other game players thereafter and can not be replied and answered in time.

As described above, the conventional websites of knowledge-sharing platform or search engines of web pages can not provide complete services of submitting and solving questions for the game players while playing the online games. As a result, it is important for designers of online games to develop a method for analyzing, matching and delivering questions of online games to increase the rate of solving the questions, and enable those game players who may encounter the similar or same questions also to obtain the answers thereof for effectively increasing the service diversity of the online games.

### SUMMARY OF THE INVENTION

It is therefore tried by the inventor to develop a method for analyzing, matching and delivering questions of an online game to solve the disadvantages existing in the above mentioned conventional query methods that can not provide better services to the online game players as described above, and provide more convenient services to the online game players and then effectively increase market competitiveness of online game providers.

A primary object of the present invention is to provide a method for analyzing, matching and delivering questions of an online game, which firstly analyzes at least one question, then matches the question with at least one user corresponding thereto, and then delivers the question to the user. The method is applied to an online game system which comprises a question-and-answer server (also called Q & A server) and a plurality of user terminals (such as personal computers, hand-held mobile phones and etc.), wherein the Q & A server is linked to the user terminals respectively for receiving signals from or transmitting signals to the user terminals. Each of the user terminals is installed with a question-and-answer program (also called Q & A program) for generating and transmitting a question signal to the Q & A server. The Q & A server is built-in with a central processing unit (CPU), a keyword database, a tag database and a user database, wherein the CPU is linked to the keyword database, the tag database and the user database, respectively; the keyword database includes a plurality of keywords; the tag database includes a plurality of property tags, each of which corresponds to at least one of the keywords; and the user database includes a plurality of user accounts, each of which corresponds to at least one of the property tags. When the CPU receives the question signal transmitted from one of the user terminals, the CPU firstly determines whether or not at least one of the keywords included in the question signal, and then reads the property tag corresponding to each of the keywords in the question signal from the tag database. After this, the CPU reads the user account in the user database, and then transmits the question signal to the user terminal corresponding to each of the user account in case that the property tag of each of the user accounts is matched with each of the property tag corresponding to each of the keywords in the question signal.

### DESCRIPTION OF THE DRAWINGS

The structure and technical means adopted by the present invention for achieving the above and other objects can be best understood by referring to the following detailed description of preferred embodiments and accompanying drawings, wherein:
FIG. 1A is a block diagram of an online game system of the present invention;
FIG. 1B is a block diagram of another online game system of the present invention;
FIG. 2A is a block diagram of keyword data of the present invention;
FIG. 2B is a block diagram of property tag data of the present invention;
FIG. 2C is a block diagram of user data of the present invention;
FIG. 3 is a flowchart of processing question signal of the present invention; and
FIG. 4 is a flowchart of processing answer signal of the present invention.

### DETAILED DESCRIPTION OF THE PREFERRED EMBODIMENTS

In general, most of the currently existing online games each has an entire story background other than the others, wherein Massively Multiplayer Online Role Playing Games (MMORPG) are now significantly becoming mainstream of currently existing commercial-type online games. A preferred embodiment of the present invention is exemplified hereinafter by using game contents of a MMORPG, however, the present invention is not limited to technical architectures and element allocations as shown below or the accompanying drawings. Besides, after fully understanding the main technical features disclosed in the present invention, any person who skilled in the art shall be able to carry out the purposes of the present invention by means of other game types, structures, devices, systems or method, which shall be deemed as equivalent skills not departing from the scope and spirit claimed in the claims of the present invention.

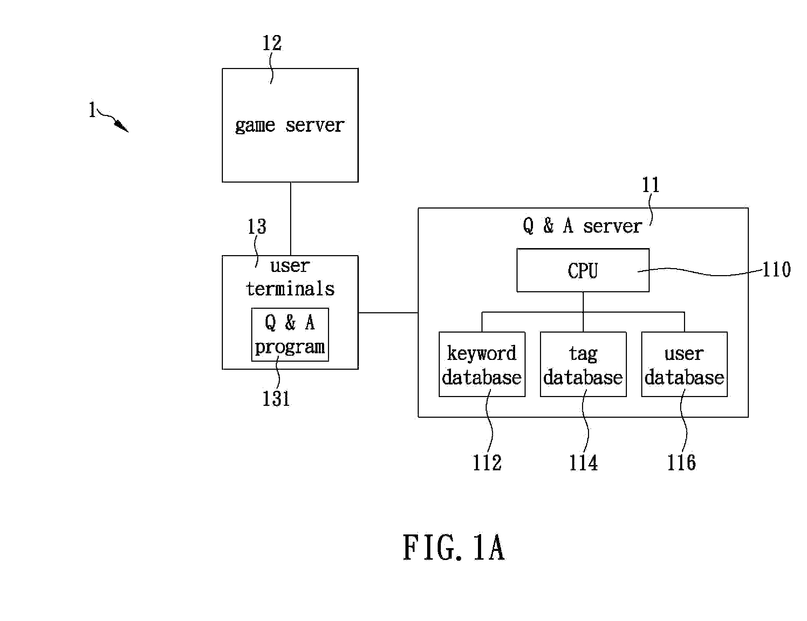

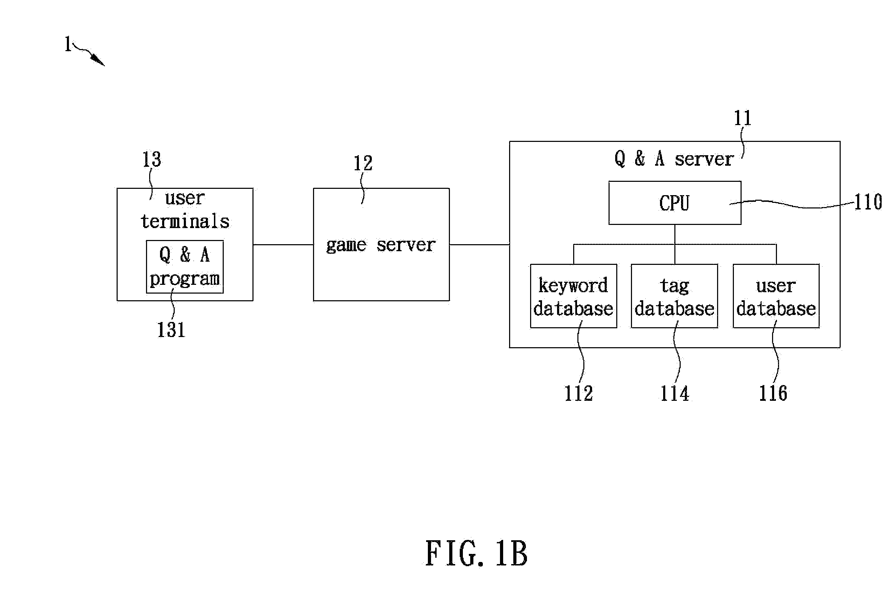

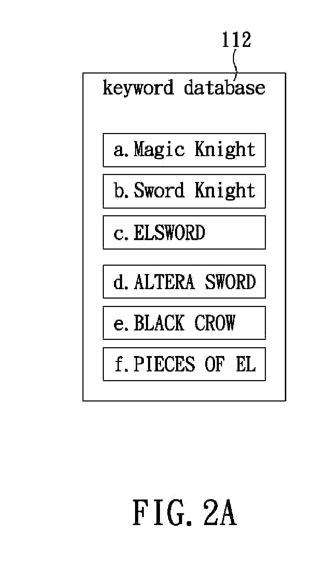

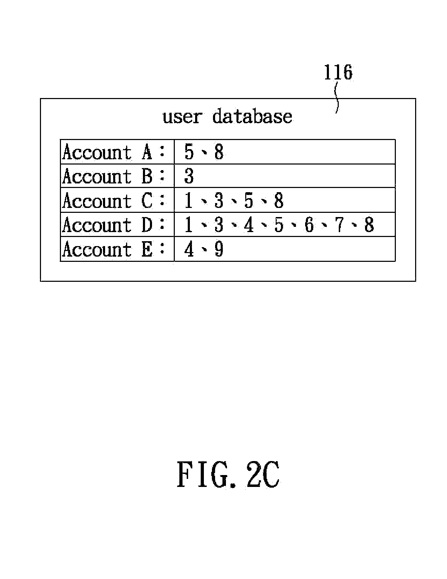

The present invention is a method for analyzing, matching and delivering questions of an online game, which firstly analyzes at least one question submitted by a questioner for defining properties of the question (i.e. the main query direction of the question and what kind of role playing in the online game submitted the question), then matches the question with at least one game player capable of solving the question, and then delivers the question to the game player for solving the question. After the question is solved, an answer thereof will be transmitted back to the questioner and the other game players corresponding to the question. Thus, not only the question can be immediately known by the game player capable of solving the question, but also the other game players corresponding to the question can also obtain the answer of the question, so that the same question will not be repeatedly queried by the other game players. For disclosing the technical means more detailed, the preferred embodiment of the present invention is shown in FIG. 1A, wherein the method for analyzing, matching and delivering questions is applied to an online game system 1 which comprises a question-and-answer server 11 (also called Q & A server) and a plurality of user terminals 13 (such as personal computers, hand-held mobile phones and PDA etc.), wherein the Q & A server 11 is linked to the user terminals 13, respectively, for receiving or transmitting signals to the user terminals 13. In implementation, a service provider generally provides a game server 12 for an online game, so that all of the different user terminals 13 can link to the game server 12 for playing the online game. The Q & A server 11 is independently disposed in the online game system 1, or incorporated into the game server 12 which executes an online game software, so that the user terminals 13 can directly link to the Q & A server 11 or the game server 12 (when the Q & A server 11 is incorporated into the game server 12), or the user terminals 13 can firstly link to the game server 12 and then link to the Q & A server 11 through the game server 12 (as shown in FIG. 1B) for building a network communication therebetween. The linkage manner of FIG. 1A is only used to describe the present invention, but not limit the relationship between the user terminals 13 and the Q & A server 11 only to the direct linkage manner. The Q & A server 11 is built-in with a central processing unit 110 (CPU), a keyword database 112, a tag database 114 and a user database 116, wherein the CPU 110 is linked to the keyword database 112, the tag database 114 and the user database 116, respectively, for reading information from the keyword database 112, the tag database 114 and the user database 116 and transmitting information thereto. Furthermore, as referring to FIG. 2A, the keyword database 112 includes a plurality of keywords which are created by the service provider in advance and mainly include article names (such as "d. ALTERA SWORD" , "e. BLACK CROW", "f. PIECES OF EL", ...), job names (such as "a. MAGIC KNIGHT", "b. SWORD KNIGHT", "c. ELSWORD"...) and skill names existing in the online game (such as an online game, namely "ELSWORD", which is designed by a Korean online game company, namely "KOG STUDIOS"). As referring to FIG.s 2A and 2B, the tag database 114 includes a plurality of property tags, each of which is created by the service provider in advance and corresponds to at least one of the keywords or at least one of the other property tags, such as a property tag "1. Role" corresponds to "a. MAGIC KNIGHT" and "b. SWORD KNIGHT", respectively; a property tag "7. Weapon" corresponds to "d. ALTERA SWORD" and "e. BLACK CROW", respectively; a property tag "8. Tool" corresponds to "f. PIECES OF EL" ; and a property tag "3. Weapon Tool" corresponds to "7. Weapon" and "8. Tool". As referring to FIG.s 2B and 2C, the user database 116 includes a plurality of user accounts, each of which corresponds to at least one of the property tags, such as an account "A" corresponds to the property tags "5. Elsword" and "8. Tool"; and an account "B" corresponds to the property tag "3. Weapon Tool". Because most of the online games have specific story backgrounds more sophisticated than ordinary computer games, many names of roles, tools, skills and maps... etc. existing in the online games are pre-set by the service provider in advance, so that the service provider should plan out specific information for conveniently defining property tag for each of the roles, tools, skills and maps... etc..

Again referring to FIG.s 1A, 2A, 2B and 2C, when a game player has a question and hopes to obtain at least an answer thereof, the game player can login in a discussion bulletin board built by the service provider through one of the user terminals 13, and then create a question signal in the discussion bulletin board, such as "what kind of PIECES OF EL should MAGIC KNIGHT match with ?". The question signal will then be transmitted to the Q & A server 11. Because the game player publishes the question on the discussion bulletin board built by the service provider, the question signal created and transmitted by the user terminal 13 will firstly be transmitted to a server of the discussion bulletin board and then indirectly transmitted to the Q & A server 11 through the server of the discussion bulletin board. Meanwhile, the game player can install a question-and-answer program 131 (also called Q & A program) in the user terminal 13, and directly transmit the question signal to the Q & A server 11 through the Q & A program 131. When the Q & A server 11 receives the question signal from the user terminal 13, the CPU 110 reads texts included in the question signal and compares the texts with the keywords preset in the keyword database 112. For example, if the texts in the question signal comprise keywords "a. MAGIC KNIGHT" and "f. PIECES OF EL", the CPU 110 reads property tags from the tag database 114 according to the keywords, such as the keywords corresponding to the property tags "5. Elsword" and "8. Tool" respectively and the property tags corresponding to the other property tags "1. Role" and "3. Weapon Tool", which means that all of the property tags "1. Role", "3. Weapon Tool", "5. Elsword" and "8. Tool" are related property tags of the keywords. After this, the CPU 110 reads the user account in the user database 116, and determines whether or not property tags in each of the user account are matched with the property tags corresponding to the question signal. When it is determined that the property tags in the user account are matched with the property tags corresponding to the question signal, the CPU 110 transmits the question signal to the user account. For example, using messages or online callings to notify the user terminal 13 of the user account, or sending E-mails to network mail boxes corresponding to the user account. Thus, the question queried by the game player can be promptly known by the other game players having the property tags in their user account matched with the property tags corresponding to the question signal. Thus, the problem that a question is delayed several days without being answered by the other game players will be effectively prevented. Furthermore, when anyone of the other game players capable of solving the question views the question and provides an answer, this game player will then send an answer signal to the Q & A server 11 through a user terminal 13 corresponding to this game player. After the Q & A server 11 receives the answer signal, the Q & A server 11 will transmit the answer signal to the user terminal 13 of the user account who sent the question signal, and simultaneously transmit the answer signal to the other user terminals 13 corresponding to the user accounts having the property tags of the question signal, i.e. the user terminals 13 who have ever received the question signal. Therefore, although the other game players are not the questioner, they still can obtain the answer of the question. As a result, when the other game players encounter the same question in the future, they will be able to solve the question by himself/herself according to the answer previously received without repeatedly querying other people for solving the same question, so as to substantially enhance the convenience for the other game players in playing the online game.

Moreover, again referring to FIG. 1A, when the service provider wants to allow the question signal to be precisely matched with and delivered to the other game players. While comparing the property tags corresponding to the question signal with the property tags in the user account, the CPU 110 can be set to transmit the question signal to the other user accounts only when the property tags in the user account completely comprise the property tags corresponding to the question signal. For example, as shown in FIGs. 2A to 2C, the property tags corresponding to the question signal are "1. Role", "3. Weapon Tool", "5. Elsword" and "8. Tool", and only the property tags of the user accounts "C" and "D" in the user accounts completely comprise the property tags "1. Role", "3. Weapon Tool", "5. Elsword" and "8. Tool", the CPU 110 will transmit the question signal to the user accounts "C" and "D". As a result, the game player of the user account "C" or "D" may be the person who knows the question in the question signal with a higher possibility to provide a more correct answer corresponding thereto. In addition, when the service provide wants to match the question signal with and deliver the same to most of the other game players, the CPU 110 will compare the property tags corresponding to the question signal with the property tags of the user account, and will be set to transmit the question signal to the user accounts only when the property tags in the user account comprise a portion of the property tags corresponding to the question signal. For example, the property tags corresponding to the question signal are "1. Role", "3. Weapon Tool", "5. Elsword" and "8. Tool", and the property tags of the user accounts "A", "B", "C" and "D" comprises at least one of the property tags "1. Role", "3. Weapon Tool", "5. Elsword" and "8. Tool" respectively, the CPU 110 will transmit the question signal to the user accounts "A", "B", "C" and "D" respectively. As a result, the question is widely spread out and will be promptly answered.

Furthermore, as referring now to FIG. 1A, the service provider builds relationships between user account and property tags as follows:
(1) Game player actively builds the relationships between his/her own user account and the property tags:
   When a game player creates a user account, the service provider will use a list to query the game player what type of questions the game player hopes to receive in the future and list a plurality of items for being selected by the game player, wherein
   each of the items corresponds to one property tag, so that the game player can select at least one item according to interests or expertise of the game player. Thus, the Q & A server 11 can build relationships between the property tags selected by the game player and the user account created by the game player accordingly;
(2) The relationships between the user account and property tags are passively built according to a role of the game player playing in the online game:
   Jobs, learning skills or wearing clothes and tools of the role in the online game correspond to different property tags. Thus, when the game player creates a role in the online game and the role gradually learns different skills or wears different tools in the online game, the role will have corresponding property tags. Thus, the Q & A server 11 will build relationships between the property tags of the role and the user account corresponding to the role;
(3) The relationships between the user account and the property tags are passively built according to browsing the online game:
   When the game player uses a user account to log in an online game website provided by the game service provider, browsing behaviors thereof (including browsing homepages of the website, downloading game wallpapers and etc.) will be recorded. If the content of the homepages, the time of browsing or the game wallpapers have been pre-set with corresponding property tags, the Q & A server 11 will build relationships between the property tags and the user account; and
(4) The relationships between the user account and the property tags are passively built according to keywords in an answer:
   When a game player uses a user account to answer a question submitted by the other game players, the Q & A server 11 will analyze whether or not the answer includes at least one keyword. When the answer includes specific keywords corresponding property tags, the Q & A server 11 will build relationships between the property tags and the user account.

As described above, the service provider can build relationships between the user account and property tags by using the above methods according to design needs. In general, the user accounts having similar or same property tags are more easier to encounter similar or same questions in the online game, or can rapidly understand the meanings of the questions and give answers thereto. Thus, as referring back to FIG. 1A, after the Q & A server 11 transmits the question signal to the user terminals 13 of the user accounts having related property tags, the ratio of answering the question will be substantially increased. Then, when the question is answered, the Q & A server 11 will receive an answer signal transmitted from one of the user terminals 13 of the user accounts having the related property tags. After this, the Q & A server 11 will transmit the answer signal to the user terminal 13 of the questioner and the other user terminals 13 of the user accounts having the related property tags, respectively. Therefore, although the other user terminals 13 of the user accounts having the related property tags didn't submit the question, they would also receive and know the answer of the question in time and successfully resolve the same question while playing the online game in the future. As a result, it is unnecessary for the other user terminals 13 of the user accounts having the related property tags to search the old question and corresponding answer again, or repeatedly submit the same question and wait for an answer corresponding thereto, so that the convenience of solving questions for the game player while playing an online game can be efficiently enhanced.

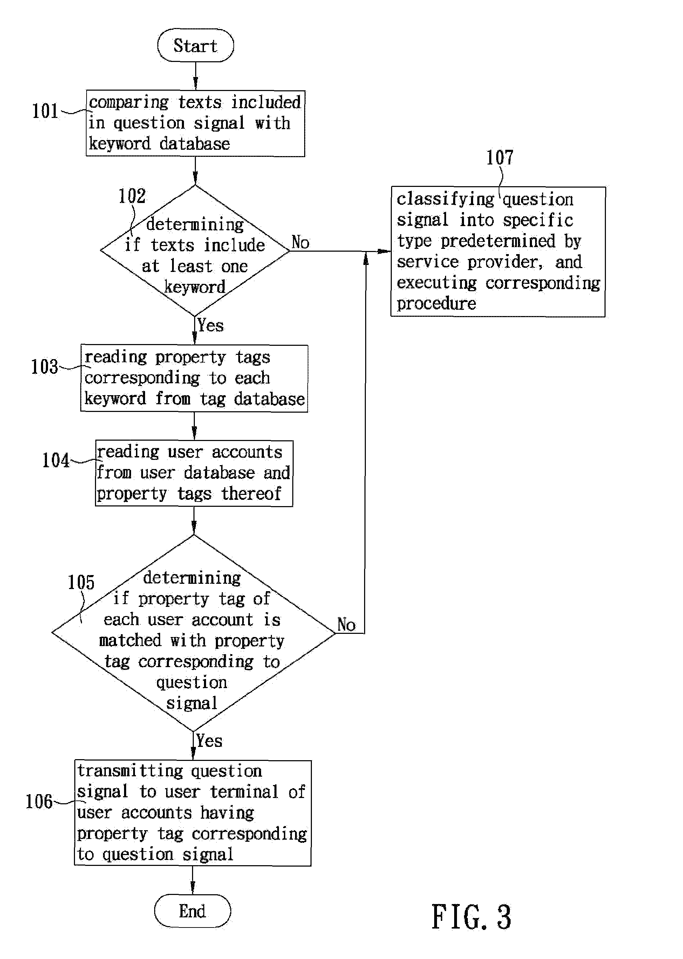

In order to clearly represent steps of a flowchart of the method for analyzing and matching questions of an online game according to the present invention, a processing procedure of the CPU 110 is exemplified hereinafter. As referring to FIGs. 1A and 3, when the CPU 110 receives a question signal, the CPU 110 will execute the following steps:
In a step (101), reading texts included in the question signal, comparing the texts with a plurality of keywords preset in the keyword database 112, and going to a step (102);
In the step (102), determining whether or not the texts include at least one keyword stored in the keyword database 112; if yes, going to a step (103); and if no, going to a step (107);
In the step (103), reading property tags corresponding to each of the at least one keyword from the tag database 114, and going to a step (104);
In the step (104), reading a plurality of user accounts and property tags corresponding to the user accounts from the user database 116, and going to a step (105);
In the step (105), determining whether or not the property tag of each of the user accounts includes the property tag corresponding to the question signal; if yes, going to a step (106); and if no, go to the step (107);
In the step (106), transmitting the question signal to at least one user terminal 13 of which the user account has the property tag corresponding to the question signal; and
In the step (107), classifying the question signal into a specific type predetermined by a service provider, and executing a corresponding procedure.

According to the above processing procedure, the method for analyzing, matching and delivering questions of an online game of the present invention can promptly analyze one question, and match the question with specific user accounts capable of answering the question. It should be noted that the processing procedure mentioned above will execute a specific procedure when the question signal doesn't include any keyword or there isn't any one of user accounts having the property tag of the question signal, the specific procedure is preset by the service provider. For example, when the question signal doesn't include any keyword, the Q & A server 11 will transmit the question signal to a game manager, so that the game manager can create a new keyword corresponding thereto; or the Q & A server 11 will only publish the question on a discussion bulletin board without transmitting the question signal to any user account. In addition, when there isn't any one of user accounts having the property tag of the question signal, the Q & A server 11 can transmit the question signal to a game manager, so that the game manager can create a new keyword corresponding thereto; or the Q & A server 11 can transmit the question signal to each of the user accounts for obtaining an answer of the question.

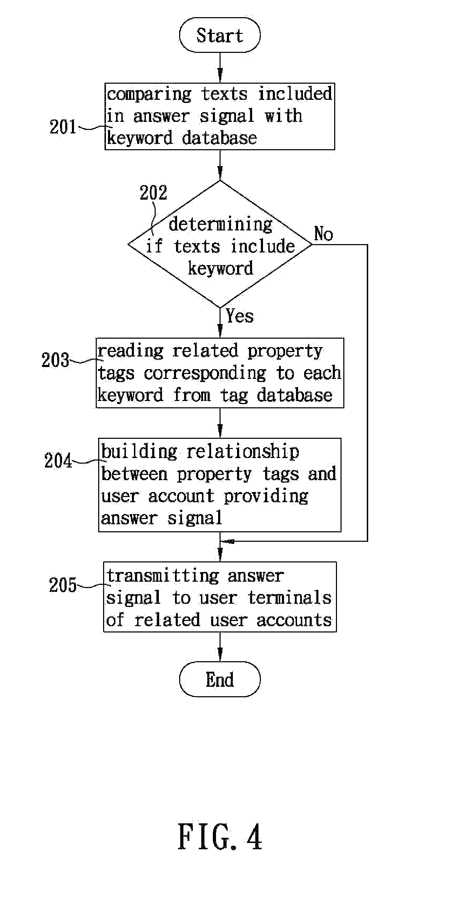

Besides, as referring now to FIGs. 1A and 4, after the CPU 110 receives an answer signal, the CPU 110 will execute the following steps:
In a step (201), reading texts included in the answer signal, comparing the texts with a plurality of keywords preset in the keyword database 112, and going to a step (202);
In the step (202), determining whether or not the texts include at least one keyword stored in the keyword database 112; if yes, going to a step (203); and if no, going to a step (205);
In the step (203), reading property tags corresponding to each of the keywords from the tag database 114, and going to a step (204);
In the step (204), building relationships between the property tags and the user account providing the answer signal, and going to the step (205); and
In the step (205), transmitting the answer signal to user terminals 13 of related user accounts, which have the property tags corresponding to the question signal.

Thus, as referring to FIG. 1A again, when there is one game player to answer the question by using his/her own user account, the Q & A server 11 will firstly determine whether or not the texts of the answer have keywords; if not, the Q & A server 11 will transmit the answer signal to the user account submitting the question and other user accounts having the property tags corresponding to the question signal; and if yes, the Q & A server 11 will analyze the property tags corresponding to the answer signal, then build relationships between the property tags and the user account answering the question, and finally transmit the answer signal to the user terminal 13 submitting the question (i.e. the user account submitting the question) and other user terminals 13 of the user accounts having the property tags corresponding to the question signal.

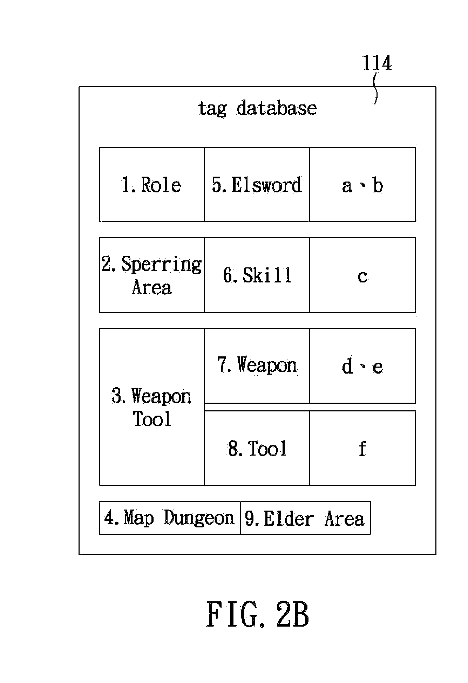

It should be noted that, except the texts, the question signal further comprises at least one property tag in other embodiments of the present invention, wherein the property tag is a property tag of the user account of the questioner. For example, as referring to FIGs. 2A to 2C, when the account "A" submits a question of "what kind of PIECES OF EL should MAGIC KNIGHT match with ?", the question signal thereof will include texts of "what kind of PIECES OF EL should MAGIC KNIGHT match with ?" and property tags "5. Elsword" and "8. Tool" corresponding to the account "A". Thus, when the Q & A server 11 reads the texts of the question signal, the Q & A server 11 will also read the property tags included in the question signal. As a result, when the Q & A server 11 compares the user information with the property tags corresponding to the question signal, the Q & A server 11 will consider the property tags "5. Elsword" and "8. Tool" as property tags of the question signal, so as to increase the matching ratio of the question signal. In fact, user accounts having similar or same property tags are more easier to encounter similar or same questions, so that there is higher probability to transmit the question signal to a game player capable of answering the question, and the other related game players can obtain the answer thereafter. In addition, because some of property tags (such as the property tag "9. Elder Area" as shown in FIG. 2B) do not correspond to keywords, but correspond to a map in the online game. Therefore, when some roles of the game players playing in the online game are within the map, the user accounts corresponding to these roles will be attached with the property tags "4. Map Dungeon" and "9. Elder Area". In case a role of a game player playing in the online game is within the same area and submits a question, another role of another game player having the account "E" will receive the question under the reason that the account "E" has the property tag "9. Elder Area". Therefore, the method for analyzing, matching and delivering questions of online game of the present invention can match the question with most game players of the user accounts having the property tags corresponding to the question, so that most game players not only can automatically and immediately receive the questions submitted by the questioners, but also can obtain the answers of the questions thereafter, so as to significantly improve skills in playing the online game for most game players.

Moreover, the method for analyzing, matching and delivering questions of an online game of the present invention is not limited to publish questions on the website by game players. When a game player plays the online game and encounters a question, the game player can use the Q & A program 131 (as shown in FIG. 1A) to submit the question. The user terminal 13 of the game player will transmit the question signal to the Q & A server 11. As described above, except directly transmitting the question signal from the user terminal 13 to the Q & A server 11, the question signal also can be indirectly transmitted to the Q & A server 11 through other game servers. Thus, the game player needs not to specifically log out the online game and then log in the website of the game service provider for publishing the question, so that the game player can play the online game while submitting the question. Besides, when the Q & A server 11 transmits the question signal or the answer signal to related user accounts, the Q & A server 11 will transmit the question signal or the answer signal to the roles in the online game corresponding to the user accounts in case that the game players are playing the online game. As a result, a game player is able to know questions or answers from the other game players even during playing the online game.

Terms in the preferred embodiment of the present invention are only used to clearly and conveniently describe the method claimed in the present invention, so as to enable any person skilled in the art to rapidly understand the concept and idea of the disclosure of the present invention. However, the present invention is not limited to the foregoing hardware system structure. In actual implementation, one person skilled in the art can use the technical features of the present invention to integrate a plurality of databases into one database or to convert a single Q & A server into a plurality of servers. As described above, it is only the preferred embodiment of the present invention, and it is understood that many changes and modifications to the preferred embodiment can be carried out without departing from the scope and the spirit of the invention that is intended to be limited by the appended claims.

## Claims

1. A method for analyzing, matching and delivering questions of an online game, which is applied to an online game system (1) comprising a question-and-answer (Q & A) server (11) and a plurality of user terminals (13), wherein the Q & A server (11) is linked to each of the user terminals (13) respectively, each of the user terminals (13) can generate a question signal and transmit the question signal to the Q & A server (11) and, after the Q & A server (11) receives the question signal, the Q & A server (11) executes the steps of:
determining whether or not the question signal includes at least one of keywords preset in a keyword database (112);
reading at least one property tag corresponding to the at least one keyword from a tag database (114) when it is determined that the question signal includes the at least one keyword;
determining whether or not at least one of property tags preset in a plurality of user accounts in a user database (116) is matched with the at least one property tag corresponding to the question signal; and
transmitting the question signal to at least one of the user terminals (13) corresponding to at least one of the user accounts when it is determined that at least one of the property tags in the at least one of the user accounts is matched with the at least one property tag corresponding to the question signal.

2. The method for analyzing, matching and delivering questions according to Claim 1 wherein, after the Q & A server (11) transmits the question signal to the at least one of the user terminals (13) corresponding to the at least one of the user accounts, the Q & A server (11) further executes the step of:
receiving an answer signal corresponding to the question signal transmitted from the at least one of the user terminals (13) corresponding to the at least one of the user accounts having at least one of the property tags corresponding to the question signal.

3. The method for analyzing, matching and delivering questions according to Claim 2 wherein, after the Q & A server (11) receives the answer signal, the Q & A server (11) further executes the steps of:
determining whether or not the answer signal includes at least one of the keywords in the keyword database (112);
reading at least one property tag corresponding to the at least one keyword from the tag database (114) when it is determined that the answer signal includes the at least one keyword;
building a relationship between the at least one property tag and the user account of the user terminal (13) transmitting the answer signal; and
transmitting the answer signal to the user terminal (13) submitting the question signal and the other user terminals (13) of the user accounts having the property tag corresponding to the property tag of the question signal.

4. The method for analyzing, matching and delivering questions according to Claim 3 wherein, after the Q & A server (11) determines that the answer signal doesn't include the keywords in the keyword database (112), the Q & A server (11) directly transmits the answer signal to the other user terminals (13) of the user accounts having the property tag corresponding to the property tag of the question signal.

5. The method for analyzing, matching and delivering questions according to Claim 1, 2, 3, or 4 wherein the tag database (114) includes a plurality of property tags, and each of the property tags corresponds to at least one of the keywords or at least one of the property tags.

6. The method for analyzing, matching and delivering questions according to Claim 5 wherein, before the Q & A server (11) transmits the question signal to the user terminals (13) corresponding to the user accounts, the Q & A server (11) further adds at least one corresponding property tag into the question signal.

7. The method for analyzing, matching and delivering questions according to Claim 5, wherein each of the user terminals (13) is further installed with a question-and-answer (Q & A) program (131).

8. The method for analyzing, matching and delivering questions according to Claim 7, wherein each of the user terminals (13) can directly transmit the question signal to the Q & A server (11) through the Q & A program (131).
